(19) Europäisches Patentamt
European Patent Office
Office européen des brevets

(11) Veröffentlichungsnummer: **0 158 600 B1**

(12) # EUROPÄISCHE PATENTSCHRIFT

(45) Veröffentlichungstag der Patentschrift: **03.04.91**

(51) Int. Cl.5: **A01N 25/00**, A01N 47/36

(21) Anmeldenummer: **85810153.8**

(22) Anmeldetag: **03.04.85**

Die Akte enthält technische Angaben, die nach dem Eingang der Anmeldung eingereicht wurden und die nicht in dieser Patentschrift enthalten sind.

(54) **Verfahren zur selektiven Unkrautbekämpfung in Nutzpflanzenkulturen.**

(30) Priorität: **11.04.84 CH 1821/84**

(43) Veröffentlichungstag der Anmeldung:
**16.10.85 Patentblatt 85/42**

(45) Bekanntmachung des Hinweises auf die Patenterteilung:
**03.04.91 Patentblatt 91/14**

(84) Benannte Vertragsstaaten:
**AT BE CH DE FR GB IT LI NL SE**

(56) Entgegenhaltungen:
**US-A- 4 272 920**
**US-A- 4 343 649**

(73) Patentinhaber: **CIBA-GEIGY AG**
**Klybeckstrasse 141**
**CH-4002 Basel(CH)**

(72) Erfinder: **Nyffeler, Andreas, Dr.**
**Gründlerstrasse 4**
**CH-4312 Magden(CH)**
Erfinder: **Stauss, Reinhold, Dr.**
**Jägerhäusleweg 18**
**W-7800 Freiburg i. Br.(DE)**

**EP 0 158 600 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues Verfahren zur selektiven Unkrautbekämpfung in Nutzpflanzenkulturen im Vorauflaufverfahren.

Gemäss der üblichen landwirtschaftlichen Technik werden Herbizide im Vor- und Nachauflaufverfahren durch Behandlung der gesamten Anbaufläche ausgebracht. Bei der Bekämpfung oder zur Verhinderung von Schäden in Nutzpflanzenbeständen durch Pilz- oder Insektenbefall werden schon seit längerer Zeit kostengünstigere Applikationsverfahren wie Saatgutbehandlung oder Applikation des Fungizids oder Insektizids in der Saatfurche angewendet. Derartige Applikationsverfahren sind für Herbizide bisher nur für relativ leicht flüchtige Herbizide, wie beispielsweise 5-Aethyl-dipropyl-thiocarbamat (EPTC), aus dem US-Patent 4 272 920 und Dale , Weed Research 23 , 63-68 (1983) in Luzerne-, Sojabohnen oder Baumwollkulturen bekannt geworden.

Die Uebertragung dieses Applikationsprinzips auf andere handelsübliche Herbizide, wie 5-(2,4-Dichlorphenoxy)-2-nitrobenzoesäure-methylester (Bifenox), 3-(3-Chlor-4-methylphenyl)-1,1-dimethylharnstoff (Chlortoluron) oder N-(1-Aethylpropyl)-3,4-dimethyl-2,6-dinitroanilin (N-(1-Ethylpropyl)-2,6-dinitro -3,4-xylidene), auf andere Kulturen wie Getreide ist nicht möglich. Entsprechende Versuche ergeben eine Schädigung der Kulturpflanzen ohne nennenswerte Beeinträchtigung der Unkrautpopulation. Diese unterschiedliche Wirkung von EPTC und anderen Herbiziden (Bifenox, Chlortoluron oder N-(1-Ethylpropyl)-2,6-dinitro-3,4-xylidene) ist wahrscheinlich auf die gute Diffusion von EPTC in Form eines Dampfes im Boden zurückzuführen, welche Eigenschaft diese anderen Herbizide nicht besitzen; vgl. Weed Science 1983 , Vol. 31, 103-108.

Ueberraschenderweise wurde Jetzt gefunden, dass auch schwerflüchtige Herbizide, wie Herbizide aus der Klasse der Sulfonylharnstoffe, zur Saatgutbehandlung und zur Saatfurchenapplikation zum Zwecke der selektiven Unkrautbekämpfung in Kulturpflanzenbeständen geeignet sind.

Erfindungsgemäss wird daher ein Verfahren zur selektiven Bekämpfung von Unkräutern in Kulturpflanzenbeständen vorgeschlagen, das dadurch gekennzeichnet ist, dass man das Saatgut der Nutzpflanzenkulturen gleichzeitig und in naher räumlicher Nachbarschaft mit einem herbiziden Sulfonylharnstoff-Derivat auf die Kulturfläche ausbringt.

Unter Ausbringen in naher räumlicher Nachbarschaft ist im Rahmen der Erfindung sowohl die Bodenapplikation des herbiziden Sulfonylharnstoffs in der Saatfurche oder auf einer eng begrenzten Fläche um das Saatgut herum zu verstehen als auch das Säen von mit dem Herbizid vorbehandelten Saatgut. Der herbizide Wirkstoff kann dabei sowohl an der Oberfläche des Saatgutes haften als auch in die Oberfläche eingedrungen sein.

Als besonders geeignetes Verfahren zur Vorbehandlung des Saatgutes hat sich die Saatgutbeizung herausgestellt. Die Saatgutbeizung mit fungiziden oder insektiziden Wirkstoffen ist ein bekanntes, allgemein in der modernen Agrartechnik angewendetes Vefahren. Die herbiziden Sulfonylharnstoff-Derivate, die angewendet werden sollen, können dem Saatgut in festen oder flüssigen Formulierungen in einer handelsüblichen Beizapparatur zugesetzt werden. Im allgemeinen gilt der Beizvorgang als beendet, wenn die vorgesehene Wirkstoffmenge gleichmässig über das Saatgut verteilt ist.

Das erfindungsgemässe Verfahren bringt neben der Einsparung von Feldbearbeitungsvorgängen auch eine Ersparnis von angewendeten Herbiziden, wodurch gleichzeitig sowohl für den Anwender eine Kosteneinsparung als auch eine geringere Belastung der Umwelt mit Pestiziden erreicht wird. So können das Saatgut und das zu verwendende herbizide Sulfonylharnatoff-Derivat in einem einzigen Arbeitsgang auf dem Feld ausgebracht werden. Durch die besondere Form der Herbizidapplikation wird gezielt nur der Unkrautbestand in unmittelbarer Umgebung der Kulturpflanze bekämpft, sodass das Herbizid nicht mehr auf der gesamten Kulturfläche in wirksamer Konzentration vorhanden sein muss, wodurch sich auch eine Einsparung an ausgebrachtem Herbizid ergibt.

Vorzugsweise werden entweder durch Applikation des herbiziden Sulfonylharnstoffs in der Saatfurche oder durch Behandlung des Saatgutes vor der Aussaat Aufwandmengen von 0,001 kg bis 1 kg Wirkstoff pro Hektar verwendet. Entsprechend der Saatgutdichte werden bei der Saatgutbehandlung pro Kilogramm Saatgut formulierte Herbizide in Mengen angewendet, die Wirkstoffmengen zwischen 0,01 g und 100,00 g entsprechen. Vorzugsweise wird die Wirkstoffmenge dabei nach dem Grad der gewünschten Unkrautbekämpfung bemessen. Gegenüber den Kulturpflanzen ist die angewendete Dosis an Herbizid unkritisch und kann in einem weiten Bereich variiert werden. In einigen Kulturen kann es durchaus von Vorteil sein, wenn der Unkrautbestand nicht vollständig beseitigt wird und damit der Bodenerosion entgegenwirken kann. Hier wird die Herbizidmenge so bemessen, dass die Konkurrenzkraft der Unkräuter (besonders in der näheren Umgebung der Kulturpflanze) nur in frühen, gegenüber der Unkrautkonkurrenz empfindlichen Entwicklungsstadien der Kultur, geschwächt wird.

Die im erfindungsgemässen Verfahren eingesetzten herbiziden Sulfonylharnstoffe werden im allgemeinen in Form handelsüblicher Formulierungen angewendet. Beispielhaft seien die folgenden Formulierungsbeispiele für Wirkstoffe aus der Klasse der Sulfonylharnstoffe genannt:

**Formulierungsbeispiele: (% = Gewichtsprozent)**

| a) Dispergierbare Pulver | a) | b) | c) | d) | e) |
|---|---|---|---|---|---|
| Wirkstoff | 20 % | 60 % | 0,5 % | 0,1 % | 90 % |
| Na-Ligninsulfonat | 5 % | 5 % | 5 % | 5 % | 5 % |
| Na-Laurylsulfat | 3 % | - | - | - | 3 % |
| Na-Diisobutylnaphthalinsulfonat | - | 6 % | 6 % | 6 % | - |
| Octylphenolpolyäthylenglykoläther (7-8 Mol AeO) | - | 2 % | 2 % | 2 % | - |
| Hochdisperse Kieselsäure | 5 % | 27 % | 27 % | 27 % | 2 % |
| Kaolin | 67 % | - | - | - | - |
| Natriumchlorid | - | - | 59,5 % | 59,9 % | - |

Der Wirkstoff wird mit den Zusatzstoffen gut vermischt und in einer geeigneten Mühle gut vermahlen.

| b) Lösungs-Konzentrat | a) | b) | c) |
|---|---|---|---|
| Wirkstoff | 1 % | 5 % | 10 % |
| Methylenchlorid | 99 % | 95 % | 90 % |

| c) Stäubemittel | a) | b) | c) | d) | e) | f) | g) |
|---|---|---|---|---|---|---|---|
| Wirkstoff | 0,1 % | 1 % | 10 % | 20 % | 10 % | 10 % | 80 % |
| Talkum | 99,9 % | - | 90 % | 80 % | - | 45 % | 20 % |
| Kaolin | - | 99 % | - | - | - | - | - |
| Aktivkohle | - | - | - | - | 90 % | 45 % | - |

Man erhält anwendungsfertige Stäubemittel, indem der Wirkstoff mit dem Träger vermischt und auf einer geeigneten Mühle vermahlen wird.

| d) Suspensions-Konzentrat | a) | b) |
|---|---|---|
| Wirkstoff | 40 % | 5 % |
| Aethylenglykol | 10 % | 10 % |
| Nonylphenolpolyäthylenglykoläther (15 Mol AeO) | 6 % | 1 % |

| | | |
|---|---|---|
| Na-Ligninsulfonat | 10 % | 5 % |
| Carboxymethylcellulose | 1 % | 1 % |
| 37%ige wässrige Formaldehyd-Lösung | 0,2 % | 0,2 % |
| Silikonöl in Form einer 75%igen wässrigen Emulsion | 0,8 % | 0,8 % |
| Wasser | 32 % | 77 % |

Der fein gemahlene Wirkstoff wird mit den Zusatzstoffen innig vermischt.

e) <u>Salzlösung</u>

| | |
|---|---|
| Wirkstoff | 5 % |
| Isopropylamin | 1 % |
| Octylphenolpolyäthylenglykoläther | 3 % |
| Wasser | 91 % |

f) <u>Salzlösung</u>

| | |
|---|---|
| Natriumsalz eines Wirkstoffs | 5 % |
| Octylphenolpolyäthylenglykoläther | 3 % |
| Wasser | 92 % |

Erfindungsgemäss zu verwendende herbizide Sulfonylharnstoffe sind in der Literatur in grosser Zahl beschrieben und zum Teil auch schon im Handel erhältlich. Bevorzugte Wirkstoffe, die nach dem erfindungsgemässen Verfahren verwendet werden, sind beispielsweise in folgenden Literaturstellen beschrieben: US-PS 4 127 405, EP-A 4 163, EP-A 7 687, EP-A 13 480, EP-A 23 141, EP-A 23 422, EP-A 30 139, EP-A 30 142, EP-A 35 893, EP-A 44 211, EP-A 44 212, EP-A 44 213, EP-A 44 807, EP-A 44 808, EP-A 44 809, EP-A 48 143, EP-A 51 466, EP-A 57 546, EP-A 70 802, EP-A 72 347, EP-A 73 652, EP-A 79 683, EP-A 83 975, EP-A 84 020, EP-A 84 224, EP-A 85 028, EP-A 85 476, EP-A 87 780, EP-A 95 925, EP-A 96 002, EP-A 96 593, EP-A 99 339, EP-A 102 925, EP-A 107 979 and EP-A 117 014.

Innerhalb dieser grossen Gruppe von Wirkstoffen sind solche besonders bevorzugt, die durch die allgemeine Formel I

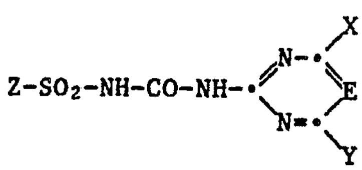

(I)

oder deren Salze beschrieben werden, worin

Z für einen Rest

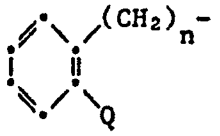 , 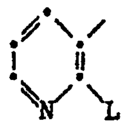 oder 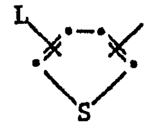 ,

L für Halogen, Nitro, $-SO_2N(CH_3)_2$, $C_1$-$C_5$-Alkoxycarbonyl, $c_1$-$c_5$-Alkyl, $C_1$-$C_5$-Alkoxy, $C_1$-$C_5$-Alkylthio oder $C_1$-$C_5$-Alkylsulfonyl,

Q für Halogen, Nitro, $-SO_2N(CH_3)_2$, $-CO-R^1$, $-(A)_m-R^2$, Phenyl, Phenoxy, $C_1$-$C_5$-Alkyl, Halogenphenyl, Halogenphenoxy, $c_1$-$c_5$-Halogenalkoxy, $C_1C_5$-Halogenalkylthio oder $C_1$-$C_5$-Halogenalkyl,

n für die Zahl null oder eins,

E für Stickstoff oder die Methinbrücke,

X für Methyl, Methoxy oder Cyclopropyl und

Y für Chlor, Methoxy, Difluormethoxy oder Aethoxy stehen, wobei

$R^1$ Wasserstoff, $C_1$-$C_5$-Alkyl, $C_1$-$C_5$-Alkoxy, $C_3$-$C_5$-Alkenyloxy oder $C_3$-$C_5$-Alkinyloxy,

A Sauerstoff, Schwefel, -SO-, $-SO_2-$ oder $-O-SO_2-$,

m die Zahl null oder eins und

$R^2$ $C_1$-$C_5$-Alkyl, $C_2$-$C_5$-Alkenyl, $C_2$-$C_5$-Alkinyl, $C_1$-$C_5$-Halogenalkyl, $C_2$-$C_7$-Alkoxyalkyl, $C_2$-$C_5$-Halogenalkenyl oder $C_2$-$C_5$-Halogenalkinyl bedeuten, mit der Massgabe, dass $R^2$ nicht für $-CH=CH_2$ oder $-C\equiv CH$ steht, wenn m die Zahl eins bedeutet.

Die Wirkstoffe der Formel I sind mit Vorteil in Kulturen von Getreide, Reis, Soja, Mais oder Raps zur preemergenten selektiven Unkrautbekämpfung gemäss dem erfindungsgemässen Verfahren einsetzbar.

Zur Verwendung in Getreidekulturen, insbesondere in Weizen und Gerste, eignen sich in bevorzugter Weise Sulfonylharnstoffe der engeren Formel Ia

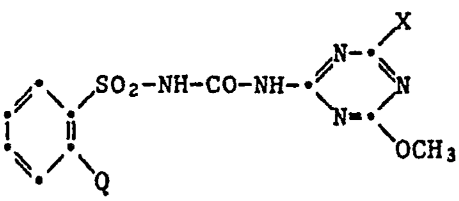 (Ia)

handelt, worin

X für Methyl oder Methoxy steht,

Q für Halogen, $-SO_2N(CH_3)_2$, $-C0-R^1$ oder $-(A)_m-R^2$ steht und

$R^1$ Wasserstoff, $C_1$-$C_5$-Alkyl, $C_1$-$C_5$-Alkoxy, $C_3$-$C_5$-Alkenyloxy oder $C_3$-$C_5$-Alkinyloxy,

A Sauerstoff, Schwefel, -SO-, $-SO_2-$ oder $-O-SO_2-$,

m die Zahl null oder eins und

$R^2$ $C_1$-$C_5$-Alkyl, $C_2$-$C_5$-Alkenyl, $C_2$-$C_5$-Alkinyl, $C_1$-$C_5$-Halogenalkyl, $C_2$-$C_7$-Alkoxyalkyl, $C_2$-$C_5$-Halogenalkenyl oder $C_2$-$C_5$-Halogenalkinyl bedeuten, mit der Massgabe, dass $R^2$ nicht für $-CH=CH_2$ oder $-C\equiv CH$ steht, wenn m die Zahl eins bedeutet.

Unter den Verbindungen der Formel Ia sind diejenigen hervorzuheben, in denen das Symbol Q für 2-Chloräthoxy, 2-Methoxyäthoxy, Chlor oder Methoxycarbonyl steht. Bevorzugte Wirkstoffe sind:

N-[2-(2-Chloräthoxy)phenylsulfonyl]-N'-(4-methoxy-6-metyl-1,3,5-triazin-2-yl)harnstoff,

N-[2-(2-Methoxyäthoxy)phenylsulfonyl]-N'-(4-methoxy-6-methyl-1 ,3,5-triazin-2-yl)harnstoff,

N-[2-(2-Methoxyäthoxy)phenylsulfonyl]-N'-(4,6-dimethoxy-1,3,5-triazin-2-yl)harnstoff,

N-(2-Chlorphenylsulfonyl)-N'-(4-methoxy-6-methyl-1,3,5-triazin-2-yl)harnstoff und

N-(2-Methoxycarbonylphenylsulfonyl)-N'-(4-methoxy-6-metyl-1,3,5-triazin-2-yl)harnstoff.

Zur Verwendung in Reiskulturen eignen sich in bevorzugter Weise Sulfonylharnstoffe der Formeln Ib oder Ic

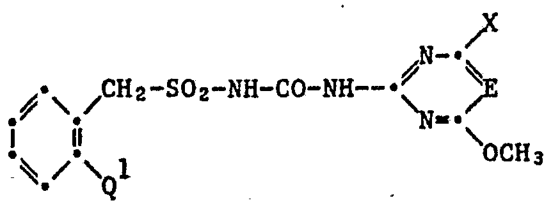

(Ib)

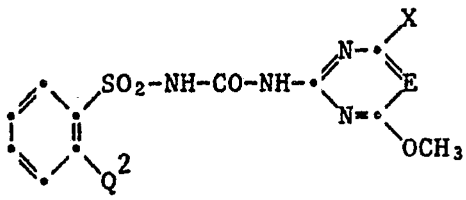

(Ic)

worin

$Q^1$ für $C_1$-$C_4$-Alkoxycarbonyl oder $C_3$-$C_4$-Alkenyloxycarbonyl,

$Q^2$ für Phenyl, Phenoxy, $C_1$-$C_5$-Alkoxy, $C_1$-$C_5$-Alkylthio, $C_1$-$C_5$-Alkyl, Halogenphenyl, Halogenphenoxy, $C_1$-$C_5$-Halogenalkoxy, $C_1$-$C_5$-Halogenalkylthio, $C_1$-$C_5$-Halogenalkyl, $C_2$-$C_5$-Alkoxyalkoxy, $C_2$-$C_5$-Alkenyloxy oder $C_2$-$C_5$-Halogenalkenyloxy,

E für Stickstoff oder die Methinbrücke und

X für Methyl oder Methoxy stehen.

Unter den Verbindungen der Formel Ib, ist diejenige hervorzuheben, in der $Q^1$ für Methoxycarbonyl, E für die Methinbrücke und X für Methoxy stehen, d.h. die Verbindung N-(2-Methoxycarbonylbenzylsulfonyl)-N'-(4,6-dimethoxy-pyrimidin-2-yl)harnstoff.

Unter den Verbindungen der Formel Ic sind diejenigen hervorzuheben, in denen entweder $Q^2$ für Perfluoräthoxy, E für Stickstoff oder die Methinbrücke und X für Methoxy; oder $Q^2$ für Phenyl, E für die Methinbrücke oder Stickstoff und X für Methyl; oder $Q^2$ für 2-Methoxyäthoxy, E für Stickstoff und X für Methoxy; oder $Q^2$ für 2-Isopentenyloxy, E für Stickstoff und x für Methoxy; oder $Q^2$ für 1,2-Dichlorvinyloxy, E für Stickstoff und X für Methoxy stehen, d.h. die Verbindungen N-(2-Perfluoräthoxyphenylsulfonyl)-N'-(4,6-dimethoxy-1,3,5-triazin-2-yl)harnstoff,
N-(2-Phenylphenylsulfonyl)-N'-(4-methoxy-6-methyl-pyrimidin-2-yl)-harnstoff,
N-[2-(2-Methoxyäthoxy)phenylsulfonyl]-N'-(4,6-dimethoxy-1,3,5-triazin-2-yl)harnstoff,
N-(2-Phenylphenylsulfonyl)-N'-(4-methoxy-6-methyl-1,3,5-triazin-2-yl)harnstoff,
N-[2-(2-Isopentenyloxy)phenylsulfonyl]-N'-(4,6-dimethoxy-1,3,5-triazin-2-yl)harnstoff,
N-[2-(1,2-Dichlorvinyloxy)phenylsulfonyl]-N'-(4,6-dimethoxy-1,3,5-triazin-2-yl)harnstoff und
N-(2-Perfluoräthoxyphenylsulfonyl)-N'-(4,6-dimethoxypyrimidin-2-yl)harnstoff.

Zur Verwendung in Rapskulturen eignet sich in bevorzugter Weise der Wirkstoff
N-(2-Methoxycarbonylphenylsulfonyl)-N'-(4-äthoxy-6-cyclopropyl-1,3,5-triazin-2-yl)harnstoff.

Die Durchführung des erfindungsgemässen Verfahrens ist wirtschaftlich besonders vorteilhaft, weil zur Aussaat der Kulturpflanze und zur preemergenten Unkrautbekämpfung nur noch ein einziger Arbeitsgang notwendig ist. So können bei einer einzigen Feldbearbeitung Saatgut und herbizider Sulfonylharnstoff entweder mit speziell entwickelten Saatdrillmaschinen, die das Herbizid direkt mit den unbehandelten Samen in die Saatfurche applizieren, oder vorzugsweise mit üblichen Saatmethoden bei der Aussaat von mit dem Herbizid vorbehandeltem Saatgut ausgebracht werden.

Bei dieser Applikationsmethode breitet sich der herbizide Sulfonylharnstoff um den Kulturpflanzensamen herum im Boden aus und bildet so eine unkrautfreie Zone um den Kulturpflanzenkeimling aus. Innerhalb dieser Zone wird der Unkrautbewuchs durch die Wirkung des Herbizids entweder ganz verhindert oder so stark gehemmt oder zurückgedrängt, dass die Unkräuter für die Kulturpflanzen im frühen

Entwicklungsstadium keine Konkurrenz bilden. Bei einer Aussaat in Saatfurchen können die kreisförmigen unkrautfreien Zonen miteinander verschmelzen und so eine Hemmzone für Unkräuter beiderseits der Saatfurche ausbilden. Bei einer unregelmässigen Flächensaat tritt eine Verunkrautung allenfalls dort auf, wo kein Saatgut ausgebracht wurde. Bei genügend dichter Flächensaat oder bei genügend geringem Abstand der Saatfurchen kann eine vollständige Unterdrückung des Unkrautbewuchses erreicht werden.

Unter ungünstigen Klimabedingungen kann sich der erzielbare Vorteil auch ökologisch vorteilhaft auswirken, indem eine Unkrautdecke oder Reste von abgestorbenen Pflanzen zur Verhinderung von Erosion und Bodenaustrocknung erhalten bleiben und die Konkurrenzpflanzen nur im nächsten Umkreis des keimenden Kulturpflanzensamens zurückgedrängt werden. Geringe Bearbeitungskosten des Bodens werden

darüberhinaus möglich, da sich das erfindungsgemässe Applikationsverfahren auch für no-tillage-Anbaumethoden eignet.

Das anschliessende Beispiel dient der näheren Illustration der vorliegenden Erfindung.

Biologisches Beispiel:

Versuchsbeschreibung:

In einer 100 ml fassenden Glasflasche werden jeweils 30 g Weizensaatgut oder 23 g Gerstensaatgut mit einem formulierten Herbizid durch Rotation und Schütteln der Flasche gebeizt. Die Beizmengen betragen pro 30 g Weizen oder 23 g Gerste 16, 13, 8.1, 6.5, 4.07, 3.25, 1.95, 1.63, 0.98, 0.81 oder 0.41 mg Aktivsubstanz.

Die gebeizten Samen werden in Kunststoffwannen (25 cm lang, 17 cm breit und 12 cm hoch) zusammen mit Unkrautsamen in sandiger Lehmerde eingesät. Alle Samen werden bis zu einer Tiefe von 5 cm gleichmässig in die Erde eingearbeitet. Pro Saatschale werden stets gleiche Anzahlen von Unkrautsamen und 18 Weizensamen (entsprechend 180 kg/ha Saatmenge), bzw. 14 Gerstensamen, (entsprechend 150 kg/ha Saat menge), ausgesät, sodass die Aufwandmenge an Herbizid je nach Beizmenge 100, 80, 50,40, 25, 20, 12, 10, 6, 5 oder 2.5 g pro Hektar beträgt. Nach der Aussaat werden die Saatwannen regelmässig gewässert und im Gewächshaus bei einer Temperatur von 22° bis 25°C und 50 % bis 70 % relativer Luftfeuchtigkeit gehalten. 38 Tage nach der Aussaat wird die Wirkung des Herbizids im Vergleich zur unbehandelten Kontrolle anhand der beobachteten Phytotoxizität beurteilt.

Resultate:

Die Testergebnisse geben die Phytotoxizität in Prozent im Vergleich zur unbehandelten Kontrolle an: Pflanze abgestorben oder nicht gekeimt: 100 % Phytotoxizität. Unbehandelte Kontrollpflanze: 0 % Phytotoxizität.

a) Zur Beizung verwendetes Herbizid:

N-[2-(2-Chloräthoxy)phenylsulfonyl]-N'-(4-methoxy-6-methyl-1,3,5-triazin-2-yl)-harnstoff, formuliert als 1%iges Spritzpulver.

Tabelle a:

| Testpflanze | Aufwandmenge [g AS/ha] | | | |
|---|---|---|---|---|
| | 80 | 40 | 20 | 10 |
| Weizen | 30 | 10 | 0 | 0 |
| Avena fatua | 60 | 40 | 15 | 15 |
| Lolium perenne | 100 | 97 | 97 | 95 |
| Apera spica-venti | 100 | 100 | 100 | 95 |
| Stellaria media | 100 | 100 | 100 | 97 |
| Galium aparine | 100 | 95 | 90 | 85 |
| Chenopodium album | 90 | 90 | 70 | 60 |

Tabelle b:

| Testpflanze | Aufwandmenge [g AS/ha] 20 | 10 | 5 | 2.5 |
|---|---|---|---|---|
| Weizen | 5 | 0 | 0 | 0 |
| Avena fatua | 10 | 10 | 0 | 0 |
| Lolium perenne | 80 | 80 | 50 | 20 |
| Stellaria media | 100 | 97 | 97 | 90 |
| Galium aparine | 90 | 80 | 70 | 5 |
| Chenopodium album | 90 | 70 | 60 | 20 |

Tabelle c:

| Testpflanze | Aufwandmenge [g AS/ha] 80 | 40 | 20 | 10 |
|---|---|---|---|---|
| Gerste | 35 | 20 | 0 | 0 |
| Avena fatua | 50 | 40 | 40 | 40 |
| Lolium perenne | 97 | 97 | 90 | 85 |
| Apera spica-venti | 100 | 100 | 100 | 97 |
| Stellaria media | 100 | 95 | 95 | 95 |
| Galium aparine | 90 | 85 | 80 | 70 |
| Chenopodium album | 90 | 90 | 80 | 80 |

Tabelle d:

| Testpflanze | Aufwandmenge [g AS/ha] 20 | 10 | 5 | 2.5 |
|---|---|---|---|---|
| Gerste | 0 | 0 | 0 | 0 |
| Avena fatua | 10 | 10 | 0 | 0 |
| Lolium perenne | 90 | 80 | 60 | 50 |
| Stellaria media | 100 | 100 | 97 | 97 |
| Galium aparine | 95 | 80 | 60 | 50 |
| Chenopodium album | 90 | 60 | 60 | 50 |

b) zur Beizung in Form von 25%igen dispergierbaren Pulvern verwendete Herbizide:

Verb. A: N-(2-Chlorphenylsulfonyl)-N'-(4-methoxy-6-methyl-1,3,5-triazin-2-yl)-harnstoff,
Verb. B: N-(2-Difluormethoxyphenylsulfonyl)-N'-(4-methoxy-6-methyl-1,3,5-triazin-2-yl)-harnstoff,
Verb. D: N-[2-(2-Methoxyäthoxy)phenylsulfonyl]-N'-(4-methoxy-6-methyl-1,3,5-triazin-2-yl)-harnstoff,

Verb. E: N-[2-(2,2,2-Trifluoräthoxy)phenylsulfonyl]-N'-(4-methoxy-6-methyl-1,3,5-triazin-2-yl)-harnsstoff,
Verb. F: N-(2-Propyloxyphenylsulfonyl)-N'-(4,6-dimethoxy-1,3,5-triazin-2-yl)-harnstoff,
Verb. G: N-(2-Propyloxyphenylsulfonyl)-N'-(4-methoxy-6-methyl-1,3,5-triazin-2-yl)-harnstoff.

Tabelle e:

geprüftes Herbizid: Verbindung A

| Testpflanze | Aufwandmenge [g AS/ha] | | | | |
|---|---|---|---|---|---|
| | 100 | 50 | 25 | 12 | 6 |
| Weizen | 80 | 50 | 10 | 0 | 0 |
| Lolium perenne | 95 | 85 | 80 | 50 | 20 |
| Stellaria media | 97 | 80 | 70 | 50 | 50 |
| Chenopodium album | 95 | 90 | 80 | 60 | 20 |
| Veronica persica | 97 | 90 | 90 | 70 | 30 |
| Galium aparine | 97 | 90 | 90 | 40 | 10 |

Tabelle f:

geprüftes Herbizid: Verbindung A

| Testpflanze | Aufwandmenge [g AS/ha] | | | | |
|---|---|---|---|---|---|
| | 100 | 50 | 25 | 12 | 6 |
| Gerste | 40 | 30 | 5 | 0 | 0 |
| Lolium perenne | 95 | 95 | 90 | 50 | 40 |
| Stellaria media | 90 | 100 | 85 | 50 | 40 |
| Chenopodium album | 97 | 97 | 97 | 60 | 40 |
| Veronica persica | 95 | 95 | 95 | 70 | 40 |
| Galium aparine | 90 | 90 | 70 | 40 | 20 |

Tabelle g:

geprüftes Herbizid: Verbindung B

| Testpflanze | Aufwandmenge [g AS/ha] | | | | |
|---|---|---|---|---|---|
| | 100 | 50 | 25 | 12 | 6 |
| Weizen | 60 | 50 | 10 | 0 | 0 |
| Lolium perenne | 100 | 95 | 95 | 95 | 30 |
| Stellaria media | 100 | 100 | 100 | 100 | 50 |
| Chenopodium album | 100 | 100 | 97 | 97 | 50 |
| Veronica persica | 100 | 95 | 95 | 95 | 95 |
| Galium aparine | 60 | 50 | 40 | 40 | 10 |

Tabelle h:

geprüftes Herbizid: Verbindung B

| Testpflanze | Aufwandmenge [g AS/ha] 100 | 50 | 25 | 12 | 6 |
|---|---|---|---|---|---|
| Gerste | 50 | 40 | 5 | 0 | 0 |
| Lolium perenne | 100 | 100 | 100 | 90 | 30 |
| Stellaria media | 100 | 100 | 100 | 80 | 50 |
| Chenopodium album | 100 | 100 | 100 | 95 | 70 |
| Veronica persica | 100 | 100 | 100 | 95 | 70 |
| Galium aparine | 50 | 60 | 60 | 20 | 10 |

Tabelle i:

geprüftes Herbizid: Verbindung C

| Testpflanze | Aufwandmenge [g AS/ha] 100 | 50 | 25 | 12 | 6 |
|---|---|---|---|---|---|
| Weizen | 10 | 0 | 0 | 0 | 0 |
| Lolium perenne | 90 | 70 | 30 | 0 | 0 |
| Stellaria media | 100 | 70 | 10 | 0 | 0 |
| Chenopodium album | 80 | 70 | 10 | 0 | 0 |
| Veronica persica | 95 | 95 | 10 | 0 | 0 |
| Galium aparine | 90 | 75 | 10 | 0 | 0 |

Tabelle j:

geprüftes Herbizid: Verbindung C

| Testpflanze | Aufwandmenge [g AS/ha] 100 | 50 | 25 | 12 | 6 |
|---|---|---|---|---|---|
| Gerste | 30 | 20 | 10 | 0 | 0 |
| Lolium perenne | 9 | 90 | 50 | 50 | 10 |
| Stellaria media | 100 | 60 | 60 | 60 | 10 |
| Chenopodium album | 90 | 50 | 30 | 30 | 0 |
| Veronica persica | 100 | 50 | 50 | 50 | 0 |
| Galium aparine | 97 | 50 | 40 | 40 | 10 |

Tabelle k:

geprüftes Herbizid: Verbindung D

| Testpflanze | Aufwandmenge [g AS/ha] 100 | 50 | 25 | 12 | 6 |
|---|---|---|---|---|---|
| Weizen | 10 | 0 | 0 | 0 | 0 |
| Lolium perenne | 80 | 10 | 0 | 0 | 0 |
| Stellaria media | 95 | 30 | 10 | 0 | 0 |
| Chenopodium album | 95 | 40 | 30 | 0 | 0 |
| Veronica persica | 97 | 50 | 20 | 0 | 0 |
| Galium aparine | 70 | 10 | 0 | 0 | 0 |

Tabelle l:

geprüftes Herbizid: Verbindung D

| Testpflanze | Aufwandmenge [g AS/ha] 100 | 50 | 25 | 12 | 6 |
|---|---|---|---|---|---|
| Gerste | 10 | 0 | 0 | 0 | 0 |
| Lolium perenne | 90 | 20 | 20 | 10 | 10 |
| Stellaria media | 80 | 30 | 30 | 0 | 0 |
| Chenopodium album | 80 | 40 | 20 | 0 | 0 |
| Veronica persica | 80 | 50 | 30 | 10 | 10 |
| Galium aparine | 80 | 30 | 20 | 0 | 0 |

Tabelle m:

geprüftes Herbizid: Verbindung E

| Testpflanze | Aufwandmenge [g AS/ha] 100 | 50 | 25 | 12 | 6 |
|---|---|---|---|---|---|
| Weizen | 20 | 15 | 0 | 0 | 0 |
| Lolium perenne | 97 | 95 | 90 | 80 | 10 |
| Stellaria media | 100 | 100 | 97 | 95 | 30 |
| Chenopodium album | 100 | 100 | 95 | 90 | 40 |
| Veronica persica | 100 | 100 | 95 | 90 | 40 |
| Galium aparine | 95 | 75 | 60 | 60 | 20 |

Tabelle n:

geprüftes Herbizid: Verbindung E

| Testpflanze | Aufwandmenge [g AS/ha] 100 | 50 | 25 | 12 | 6 |
|---|---|---|---|---|---|
| Gerste | 40 | 10 | 0 | 0 | 0 |
| Lolium perenne | 97 | 97 | 95 | 90 | 50 |
| Stellaria media | 100 | 100 | 100 | 100 | 60 |
| Chenopodium album | 97 | 97 | 90 | 90 | 50 |
| Veronica persica | 100 | 100 | 100 | 100 | 60 |
| Galium aparine | 80 | 75 | 70 | 70 | 40 |

Tabelle o:

geprüftes Herbizid: Verbindung F

| Testpflanze | Aufwandmenge [g AS/ha] 100 | 50 | 25 | 12 | 6 |
|---|---|---|---|---|---|
| Weizen | 0 | 0 | 0 | 0 | 0 |
| Lolium perenne | 70 | 50 | 30 | 10 | 0 |
| Stellaria media | 90 | 70 | 70 | 30 | 30 |
| Chenopodium album | 90 | 90 | 90 | 60 | 60 |
| Veronica persica | 80 | 80 | 70 | 50 | 40 |
| Galium aparine | 90 | 60 | 40 | 10 | 10 |

Tabelle p:

geprüftes Herbizid: Verbindung F

| Testpflanze | Aufwandmenge [g AS/ha] 100 | 50 | 25 | 12 | 6 |
|---|---|---|---|---|---|
| Gerste | 10 | 0 | 0 | 0 | 0 |
| Lolium perenne | 90 | 50 | 50 | 50 | 0 |
| Stellaria media | 100 | 70 | 50 | 50 | 30 |
| Chenopodium album | 100 | 80 | 75 | 75 | 50 |
| Veronica persica | 100 | 80 | 60 | 50 | 30 |
| Galium aparine | 90 | 50 | 50 | 50 | 10 |

Tabelle q:

geprüftes Herbizid: Verbindung G

| Testpflanze | Aufwandmenge [g AS/ha] 100 | 50 | 25 | 12 | 6 |
|---|---|---|---|---|---|
| Weizen | 20 | 15 | 10 | 0 | 0 |
| Lolium perenne | 97 | 90 | 90 | 50 | 50 |
| Stellaria media | 100 | 80 | 80 | 40 | 40 |
| Chenopodium album | 97 | 97 | 90 | 50 | 50 |
| Veronica persica | 100 | 97 | 97 | 60 | 60 |
| Galium aparine | 100 | 70 | 70 | 40 | 40 |

Tabelle r:

geprüftes Herbizid: Verbindung G

| Testpflanze | Aufwandmenge [g AS/ha] 100 | 50 | 25 | 12 | 6 |
|---|---|---|---|---|---|
| Gerste | 60 | 40 | 0 | 0 | 0 |
| Lolium perenne | 80 | 80 | 90 | 75 | 20 |
| Stellaria media | 80 | 95 | 95 | 80 | 20 |
| Chenopodium album | 95 | 95 | 95 | 95 | 40 |
| Veronica persica | 95 | 95 | 95 | 95 | 40 |
| Galium aparine | 90 | 90 | 90 | 60 | 20 |

c) Zur Beizung verwendete handelsübliche Herbizide:

Verb. X: 5-(2,4-Dichlorphenoxy)-2-nitrobenzoesäuremethylester in Form eines 48 %igen Suspensionskonzentrat,

Verb. Y: 3-(3-Chlor-4-methylbenzyl)-1,1-dimethylharnstoff in Form eines 8O%igen dispergierbaren Pulvers,

Verb. Z: N-(1-Aethylpropyl)-3,4-dimethyl-2,6-dinitroanilin in Form eines 34%igen Emulsionskonzentrats.

Bei diesen Versuchen musstens die Aufwandmengen erheblich an Wirkstoff erhöht werden, um einen pflanzenbeeinflussende Effekt zu erhalten. Die Aufwandmengen betragen 3200, 1600, 800, 400 und 200 g Aktivsubstanz pro Hektar. Die Wirkstoffe gehören nicht zur Klasse der herbiziden Sulfonylharnstoffe, sondern sind gebräuchliche handelsübliche Herbizide zur Verwendung in Getreidekulturen.

Tabelle s:

geprüftes Herbizid: Verbindung X

| Testpflanze | Aufwandmenge [g AS/ha] 3200 | 1600 | 800 | 400 | 200 |
|---|---|---|---|---|---|
| Weizen | 10 | 0 | 0 | 0 | 0 |
| Lolium perenne | 0 | 0 | 0 | 0 | 0 |
| Stellaria media | 0 | 0 | 0 | 0 | 0 |
| Chenopodium album | 0 | 0 | 0 | 0 | 0 |
| Veronica persica | 0 | 0 | 0 | 0 | 0 |
| Galium aparine | 0 | 0 | 0 | 0 | 0 |

Tabelle t:

geprüftes Herbizid: Verbindung X

| Testpflanze | Aufwandmenge [g AS/ha] 3200 | 1600 | 800 | 400 | 200 |
|---|---|---|---|---|---|
| Gerste | 0 | 0 | 0 | 0 | 0 |
| Lolium perenne | 0 | 0 | 0 | 0 | 0 |
| Stellaria media | 0 | 0 | 0 | 0 | 0 |
| Chenopodium album | 0 | 0 | 0 | 0 | 0 |
| Veronica persica | 0 | 0 | 0 | 0 | 0 |
| Galium aparine | 0 | 0 | 0 | 0 | 0 |

Tabelle u:

geprüftes Herbizid: Verbindung Y

| Testpflanze | Aufwandmenge [g AS/ha] 3200 | 1600 | 800 | 400 | 200 |
|---|---|---|---|---|---|
| Weizen | 100 | 100 | 100 | 100 | 50 |
| Lolium perenne | 50 | 30 | 0 | 0 | 0 |
| Stellaria media | 40 | 0 | 0 | 0 | 0 |
| Chenopodium album | 50 | 10 | 0 | 0 | 0 |
| Veronica persica | 30 | 0 | 0 | 0 | 0 |
| Galium aparine | 0 | 0 | 0 | 0 | 0 |

Tabelle v:

geprüftes Herbizid: Verbindung Y

| Testpflanze | Aufwandmenge [g AS/ha] 3200 | 1600 | 800 | 400 | 200 |
|---|---|---|---|---|---|
| Gerste | 100 | 100 | 100 | 100 | 50 |
| Lolium perenne | 40 | 20 | 0 | 0 | 0 |
| Stellaria media | 0 | 0 | 0 | 0 | 0 |
| Chenopodium album | 30 | 0 | 0 | 0 | 0 |
| Veronica persica | 0 | 0 | 0 | 0 | 0 |
| Galium aparine | 0 | 0 | 0 | 0 | 0 |

Tabelle w:

geprüftes Herbizid: Verbindung Z

| Testpflanze | Aufwandmenge [g AS/ha] 3200 | 1600 | 800 | 400 | 200 |
|---|---|---|---|---|---|
| Weizen | 100 | 100 | 100 | 100 | 50 |
| Lolium perenne | 0 | 0 | 0 | 0 | 0 |
| Stellaria media | 0 | 0 | 0 | 0 | 0 |
| Chenopodium album | 0 | 0 | 0 | 0 | 0 |
| Veronica persica | 0 | 0 | 0 | 0 | 0 |
| Galium aparine | 0 | 0 | 0 | 0 | 0 |

Tabelle x:

geprüftes Herbizid: Verbindung Z

| Testpflanze | Aufwandmenge [g AS/ha] | | | | |
|---|---|---|---|---|---|
| | 3200 | 1600 | 800 | 400 | 200 |
| Gerste | 100 | 100 | 100 | 100 | 100 |
| Lolium perenne | 0 | 0 | 0 | 0 | 0 |
| Stellaria media | 0 | 0 | 0 | 0 | 0 |
| Chenopodium album | 0 | 0 | 0 | 0 | 0 |
| Veronica persica | 0 | 0 | 0 | 0 | 0 |
| Galium aparine | 0 | 0 | 0 | 0 | 0 |

## Ansprüche

1. Verfahren zur selektiven Bekämpfung von Unkräutern in Kulturpflanzenbeständen, dadurch gekennzeichnet, dass man das Saatgut der Nutzpflanzenkulturen gleichzeitig und in naher räumlicher Nachbarschaft mit einem herbiziden Sulfonylharnstoff-Derivat auf die Kulturfläche ausbringt.

2. Verfahren gemäss Anspruch 1, dadurch gekennzeichnet, dass das Saatgut mit dem Sulfonylharnstoff-Derivat behandelt wird.

3. Verfahren gemäss Anspruch 2, dadurch gekennzeichnet, dass das Saatgut mit dem Sulfonylharnstoff-Derivat gebeizt wird.

4. Verfahren gemäss Anspruch 1, dadurch gekennzeichnet, dass das Saatgut und das Sulfonylharnstoff-Derivat in der gleichen Saatfurche ausgebracht werden.

5. Verfahren gemäss Anspruch 1, dadurch gekennzeichnet, dass man pro Hektar Kulturfläche zwischen 0,001 kg und 1 kg Sulfonylharnstoff ausbringt.

6. Verfahren gemäss Anspruch 2, dadurch gekennzeichnet, dass man pro Kilogramm Saatgut zwischen 0,01 g und 100,00 g Sulfonylharnstoff verwendet.

7. Verfahren gemäss Anspruch 1, dadurch gekennzeichnet, dass der herbizide Sulfonylharnstoff der Formel I

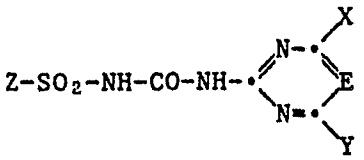

(I)

Tabelle x:

geprüftes Herbizid: Verbindung Z

| Testpflanze | Aufwandmenge [g AS/ha] 3200 | 1600 | 800 | 400 | 200 |
|---|---|---|---|---|---|
| Gerste | 100 | 100 | 100 | 100 | 100 |
| Lolium perenne | 0 | 0 | 0 | 0 | 0 |
| Stellaria media | 0 | 0 | 0 | 0 | 0 |
| Chenopodium album | 0 | 0 | 0 | 0 | 0 |
| Veronica persica | 0 | 0 | 0 | 0 | 0 |
| Galium aparine | 0 | 0 | 0 | 0 | 0 |

oder einem Salz davon entspricht, worin

Z für einen Rest

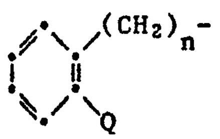 , 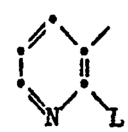 oder 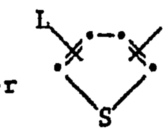 ,

L für Halogen, Nitro, $-SO_2N(CH_3)_2$, $C_1$-$C_5$-Alkoxycarbonyl, $C_1$-$C_5$-Alkyl, $C_1$-$C_5$-Alkoxy, $C_1$-$C_5$-Alkylthio oder $C_1$-$C_5$-Alkylsulfonyl,

Q für Halogen, Nitro, $-SO_2N(CH_3)_2$, $-CO-R^1$, $-(A)_m-R^2$, Phenyl, Phenoxy, $C_1$-$C_5$-Alkyl, Halogenphenyl, Halogenphenoxy, $C_1$-$C_5$-Halogenalkoxy, $C_1$-$C_5$-Halogenalkylthio oder $C_1$-$C_5$-Halogenalkyl,

n für die Zahl null oder eins,

E für Stickstoff oder die Methinbrücke,

X für Methyl, Methoxy oder Cyclopropyl und

Y für Chlor, Methoxy, Difluormethoxy oder Aethoxy stehen, wobei

$R^1$ Wasserstoff, $C_1$-$C_5$-Alkyl, $C_1$-$C_5$-Alkoxy, $C_3$-$C_5$-Alkenyloxy oder $C_3$-$C_5$-Alkinyloxy,

A Sauerstoff, Schwefel, -SO-, $-SO_2-$ oder $-O-SO_2-$,

m die Zahl null oder eins und

$R^2$ $C_1$-$C_5$-Alkyl, $C_2$-$C_5$-Alkenyl, $C_2$-$C_5$-Alkinyl, $C_1$-$C_5$-Halogenalkyl, $C_2$-$C_7$-Alkoxyalkyl, $C_2$-$C_5$-Halogenalkenyl oder $C_2$-$C_5$-Halogenalkinyl bedeuten, mit der Massgabe, dass $R^2$ nicht für $-CH=CH_2$ oder $-C\equiv CH$ steht, wenn m die Zahl eins bedeutet.

**8.** Verfahren gemäss Anspruch 1, dadurch gekennzeichnet, dass es sich beim Nutzpflanzensaatgut um Samen von Getreide, Reis, Soja, Mais oder Raps handelt.

**9.** Verfahren gemäss Anspruch 1, dadurch gekennzeichnet, dass es sich beim Saatgut um Getreidesamen und beim Sulfonylharnstoff um eine Verbindung der Formel Ia

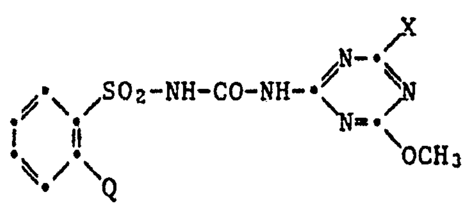 (Ia)

handelt, worin

- X für Methyl oder Methoxy steht
- Q für Halogen, $-SO_2N(CH_3)_2$, $-CO-R^1$ oder $-(A)_m-R^2$ steht und
- $R^1$ Wasserstoff, $C_1$-$C_5$-Alkyl, $C_1$-$C_5$-Alkoxy, $C_3$-$C_5$-Alkenyloxy oder $C_3$-$C_5$-Alkinyloxy,
- A Sauerstoff, Schwefel, -SO-, $-SO_2-$ oder $-O-SO_2-$,
- m die Zahl null oder eins und
- $R^2$ $C_1$-$C_5$-Alkyl, $C_2$-$C_5$-Alkenyl, $C_2$-$C_5$-Alkinyl, $C_1$ -$C_5$-Halogenalkyl, $C_2$-$C_7$-Alkoxyalkyl, $C_2$-$C_5$-Halogenalkenyl oder $C_2$-$C_5$-Halogenalkinyl bedeuten, mit der Massgabe, dass $R^2$ nicht für $-CH=CH_2$ oder $-C\equiv CH$ steht, wenn m die Zahl eins bedeutet.

**10.** Verfahren gemäss Anspruch 9, dadurch gekennzeichnet, dass im Sulfonylharnstoff der Formel Ia das Symbol Q für 2-Chloräthoxy, 2-Methoxyäthoxy, Chlor oder Methoxycarbonyl steht.

**11.** Verfahren gemäss Anspruch 1, dadurch gekennzeichnet, dass es sich beim Saatgut um Reissamen und beim Sulfonylharnstoff um eine Verbindung der Formeln Ib oder Ic

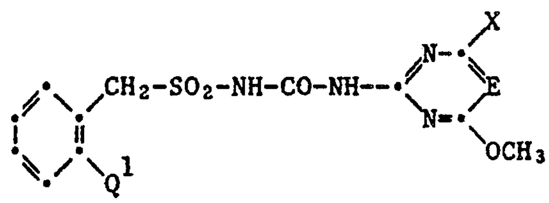

(Ib)

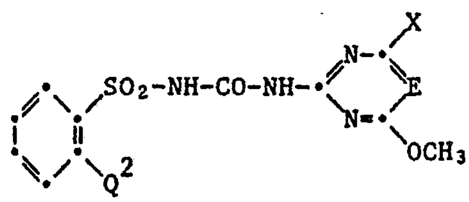

(Ic)

handelt, wobei

- $Q^1$ für $C_1$-$C_4$-Alkoxycarbonyl oder $C_3$-$C_4$-Alkenyloxycarbonyl,
- $Q^2$ für Phenyl, Phenoxy, $C_1$ -$C_5$-Alkoxy, $C_1$-$C_5$-Alkylthio, $C_1$-$C_5$-Alkyl, Halogenphenyl, Halogenphenoxy, $C_1$-$C_5$-Halogenalkoxy, $C_1$-$C_5$-Halogenalkylthio, $C_1$-$C_5$-Halogenalkyl, $C_2$-$C_5$-Alkoxyalkoxy, $C_2$-$C_5$-Alkenyloxy oder $C_2$-$C_5$-Halogenalkenyloxy,
- E für Stickstoff oder die Methinbrücke und
- X für Methyl oder Methoxy stehen.

**12.** Verfahren gemäss Anspruch 11, dadurch gekennzeichnet, dass im Sulfonylharnstoff der Formel Ib die Symbole $Q^1$ für Methoxycarbonyl, E für die Methinbrücke und X für Methoxy stehen.

**13.** Verfahren gemäss Anspruch 11, dadurch gekennzeichnet, dass im Sulfonylharnstoff der Formel Ic entweder $Q^2$ für Perfluoräthoxy, E für Stickstoff oder die Methinbrücke und X für Methoxy; oder $Q^2$ für Phenyl, E für die Methinbrücke oder Stickstoff und X für Methyl; oder $Q^2$ für 2-Methoxyäthoxy, E für Stickstoff und X für Methoxy; oder $Q^2$ für 2-Isopentenyloxy, E für Stickstoff und X für Methoxy; oder $Q^2$ für 1,2-Dichlorvinyloxy, E für Stickstoff und X für Methoxy stehen.

**14.** Verfahren gemäss Anspruch 1, dadurch gekennzeichnet, dass es sich beim Saatgut um Rapssamen und beim Sulfonylharnstoff um N-(2-Methoxycarbonylphenylsulfonyl)-N'-(4-äthoxy-6-cyclopropyl-1,3,5-triazin-2-yl)harnstoff handelt.

## Claims

**1.** A method for selectively controlling weeds in crops of cultivated plants, which method comprises

applying the seed of the crops of useful plants simultaneously with, and in close proximity to, a herbicidal sulfonylurea derivative to the cultivated area.

2. A method according to claim 1, wherein the seed is treated with the sulfonylurea derivative.

3. A method according to claim 2, wherein the seed is dressed with the sulfonylurea derivative.

4. A method according to claim 1, wherein the seed and the sulfonylurea derivative are applied in the same seed furrow.

5. A method according to claim 1, wherein between 0.001 kg and 1 kg of sulfonylurea is applied per hectare of cultivated area.

6. A method according to claim 2, wherein between 0.01 g and 100.00 g of sulfonylurea are used per kilogram of seed.

7. A method according to claim 1, wherein the herbicidal sulfonylurea is of the formula I

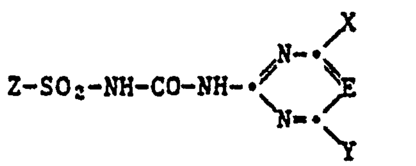 (I)

or a salt thereof, in which formula

Z is a radical

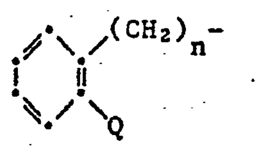 , 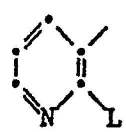 or 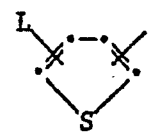 ,

| | |
|---|---|
| L | is halogen, nitro, $-SO_2N(CH_3)_2$, $C_1$-$C_5$alkoxycarbonyl, $C_1$-$C_5$alkyl, $C_1$-$C_5$alkoxy, $C_1$-$C_5$alkylthio or $C_1$-$C_5$alkylsulfonyl, |
| Q | is halogen, nitro, $-SO_2N(CH_3)_2$, $-CO-R^1$, $-(A)_m-R^2$, phenyl, phenoxy, $C_1$-$C_5$alkyl, halophenyl, halophenoxy, $C_1$-$C_5$haloalkoxy, $C_1$-$C_5$haloalkylthio or $C_1$-$C_5$haloalkyl, |
| n | is the number zero or one, |
| E | is nitrogen or the methine bridge, |
| X | is methyl, methoxy or cyclopropyl, and |
| Y | is chlorine, methoxy, difluoromethoxy or ethoxy, where |
| $R^1$ | is hydrogen, $C_1$-$C_5$alkyl, $C_1$-$C_5$alkoxy, $C_3$-$C_5$alkenyloxy or $C_3$-$C_5$alkynyloxy, |
| A | is oxygen, sulfur, -SO-, -SO,- or $-O-SO_2-$, |
| m | is the number zero or one, and |
| $R^2$ | is $C_1$-$C_5$alkyl, $C_2$-$C_5$alkenyl, $C_2$-$C_5$alkynyl, $C_1$-$C_5$haloalkyl, $C_2$-$C_7$alkoxyalkyl, $C_2$-$C_5$-haloalkenyl or $C_2$-$C_5$haloalkynyl, with the proviso that $R^2$ cannot be $-CH=CH_2$ or $-C\equiv CH$ when m is the number one. |

8. A method according to claim 1, wherein the useful plant seed is that of cereals, rice, soya-bean, maize or rape-seed.

9. A method according to claim 1, wherein the seed is cereal seed and the sulfonylurea is a compound of the formula Ia

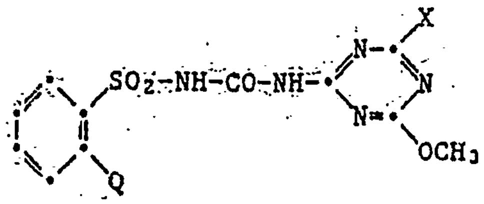

(Ia).

in which

| | |
|---|---|
| X | is methyl or methoxy, |
| Q | is halogen, $-SO_2N(CH_3)_2$, $-CO-R^1$ or $-(A)_m-R^2$, and |
| $R^1$ | is hydrogen, $C_1$-$C_5$alkyl, $C_1$-$C_5$alkoxy, $C_3$-$C_5$alkenyloxy or $C_3$-$C_5$alkynyloxy, |
| A | is oxygen, sulfur, -SO-, $-SO_2-$ or $-O-SO_2-$, |
| m | is the number zero or one, and |
| $R^2$ | is $C_1$-$C_5$alkyl, $C_2$-$C_5$alkenyl, $C_2$-$C_5$alkynyl, $C_1$-$C_5$haloalkyl, $C_2$-$C_2$alkoxyalkyl, $C_2$-$C_5$-haloalkenyl or $C_2$-$C_5$haloalkynyl, with the proviso that $R^2$ cannot be $-CH=CH_2$ or $-C\equiv CH$ when m is the number one. |

**10.** A method according to claim 9, wherein in the sulfonylurea of the formula Ia the symbol Q is 2-chloroethoxy, 2-methoxyethoxy, chlorine or methoxycarbonyl.

**11.** A method according to claim 1, wherein the seed is rice seed and the sulfonylurea is a compound of the formula Ib or Ic where

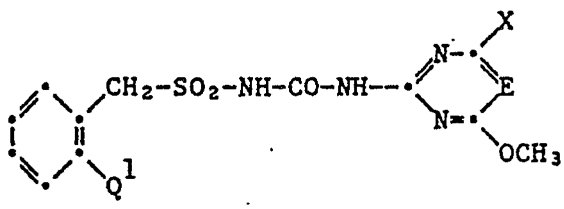

(Ib)

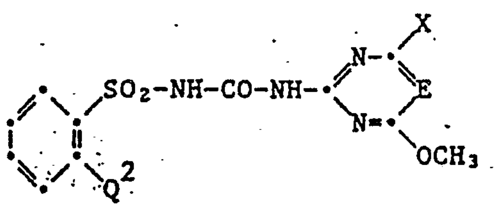

(Ic)

| | |
|---|---|
| $Q^1$ | is $C_1$-$C_4$alkoxycarbonyl or $C_3$-$C_4$alkenyloxycarbonyl, |
| $Q^2$ | is phenyl, phenoxy, $C_1$-$C_5$alkoxy, $C_1$-$C_5$alkylthio, $C_1$-$C_5$alkyl, halophenyl, halophenoxy, $C_1$-$C_5$haloalkoxy, $C_1$-$C_5$haloalkylthio, $C_1$-$C_5$haloalkyl, $C_2$-$C_5$alkoxyalkoxy, $C_2$-$C_5$alkenyloxy or $C_2$-$C_5$haloalkenyloxy, |
| E | is nitrogen or the methine bridge, and |
| X | is methyl or methoxy. |

**12.** A method according to claim 11, wherein in the sulfonylurea of the formula Ib the symbol $Q^1$ is methoxycarbonyl, E is the methine bridge and X is methoxy.

**13.** A method according to claim 11, wherein in the sulfonylurea of the formula Ic the symbol $Q^2$ is perfluoroethoxy, E is nitrogen or the methine bridge and X is methoxy; or $Q^2$ is phenyl, E is the methine bridge or nitrogen and X is methyl; or $Q^2$ is 2-methoxyethoxy, E is nitrogen and X is methoxy; or $Q^2$ is 2-isopentenyloxy, E is nitrogen and X is methoxy; or $Q^2$ is 1,2-dichlorovinyloxy, E is nitrogen and X is methoxy.

14. A method according to claim 1, wherein the seed is rape-seed and the sulfonylurea is N-(2-methoxycarbonylphenylsulfonyl)-N'-(4-ethoxy-6-cyclopropyl-1,3,5-triazin-2-yl)urea.

## Revendications

1. Procédé pour combattre sélectivement les végétaux adventices dans les cultures de végétaux utiles, caractérisé en ce que l'on épand les semences de la plante cultivée sur l'aire de culture en même temps qu'un dérivé de sulfonylurée herbicide et au voisinage immédiat de ce dernier.

2. Procédé selon la revendication 1, caractérisé en ce que l'on traite les semences par le dérivé de sulfonylurée.

3. Procédé selon la revendication 2, caractérisé en ce que l'on désinfecte les semences par le dérivé de sulfonylurée.

4. Procédé selon la revendication 1, caractérisé en ce que l'on épand les semences et le dérivé de sulfonylurée dans le même sillon de semailles.

5. Procédé selon la revendication 1, caractérisé en ce que l'on épand de 0,001 kg à 1 kg de sulfonylurée par ha d'aire de culture.

6. Procédé selon la revendication 2, caractérisé en ce que l'on utilise de 0,01 g à 100,00 g de sulfonylurée par kg de semences.

7. Procédé selon la revendication 1, caractérisé en ce que la sulfonylurée herbicide répond à la formule I

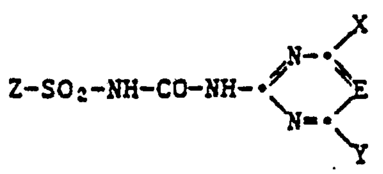

(I)

éventuellement à l'état de sel,
dans laquelle

Z représente un groupe

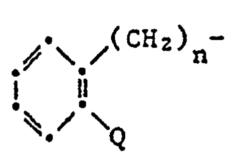 , 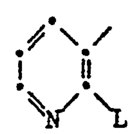 ou 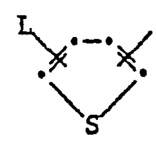 ,

L représente un halogène, un groupe nitro, $-SO_2N(CH_3)_2$, (alcoxy en C 1-C 5)-carbonyle, alkyle en C 1-C 5, alcoxy en C 1-C 5, alkylthio en C 1-C 5 ou alkylsulfonyle en C 1-C 5,

Q représente un halogène, un groupe nitro, $-SO_2N(CH_3)_2$, $-CO-R^1$, $-(A)_m-R^2$, phényle, phénoxy, alkyle en C 1-C 5, halogénophényle, halogénophénoxy, halogénoalcoxy en C 1-C 5, halogénoalkylthio en C 1-C 5 ou halogénoalkyle en C 1-C 5,

n est égal à 0 ou 1,

E représente l'azote ou le pont méthine,

X représente un groupe méthyle, méthoxy ou cyclopropyle, et

Y représente le chlore, un groupe méthoxy, difluorométhoxy ou éthoxy,

$R^1$ représente l'hydrogène, un groupe alkyle en C 1-C 5, alcoxy en C 1-C 5, alcényloxy en C 3-C 5 ou alcynyloxy en C 3-C 5,

A représente l'oxygène, le soufre, un Pont -SO-, $-SO_2$-ou $-O-SO_2-$,

m est égal à 0 ou 1, et

$R^2$ représente un groupe alkyle en C 1-C 5, alcényle en C 2-C 5, alcynyle en C 2-C 5, halogénoalkyle en C 1-C 5, alcoxyalkyle en C 2-C 7, halogénoalcényle en C 2-C 5 ou halogénoalcynyle en C 2-C 5, sous réserve que $R^2$ ne peut représenter $-CH=CH_2$ ni $-C\equiv CH$ lorsque m est égal à 1.

**8.** Procédé selon la revendication 1, caractérisé en ce que les semences de végétaux utiles sont des semences de céréales, de riz, de soja, de maïs ou de colza.

**9.** Procédé selon la revendication 1, caractérisé en ce que les semences sont des semences de céréales et la sulfonylurée est un composé de formule Ia

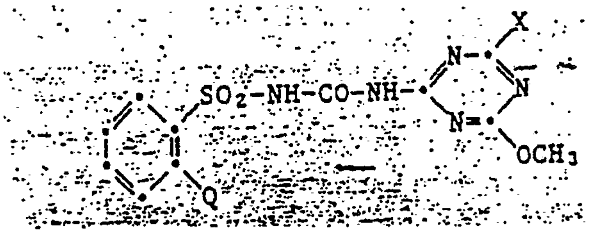

(Ia)

dans laquelle

X représente un groupe méthyle ou méthoxy,

Q représente un halogène, un groupe $-SO_2N(CH_3)_2$, $-CO-R^1$ ou $-(A)_m-R^2$, et

$R^1$ représente l'hydrogène, un groupe alkyle en C 1-C 5, alcoxy en C 1-C 5, alcényloxy en C 3-C 5 ou alcynyloxy en C 3-C 5,

A représente l'oxygène, le soufre, -SO-, $-SO_2-$ ou $-O-SO_2-$,

m est égal à 0 ou 1, et

$R^2$ représente un groupe alkyle en C 1-C 5, alcényle en C 2-C 5, alcynyle en C 2-C 5, halogénoalkyle en C 1-C 5, alcoxyalkyle en C 2-C 7, halogénoalcényle en C 2-C 5, ou halogénoalcynyle en C 2-C 5, sous réserve que $R^2$ ne peut représenter $-CH=CH_2$ ni $-C\equiv CH$ lorsque m est égal à 1.

**10.** Procédé selon la revendication 9, caractérisé en ce que dans la sulfonylurée de formule Ia, le symbole Q représente un groupe 2-chloréthoxy, 2-méthoxyéthoxy, le chlore ou un groupe méthoxycarbonyle.

**11.** Procédé selon la revendication 1, caractérisé en ce que les semences sont des semences de riz et la sulfonylurée est un composé de formule Ib ou Ic

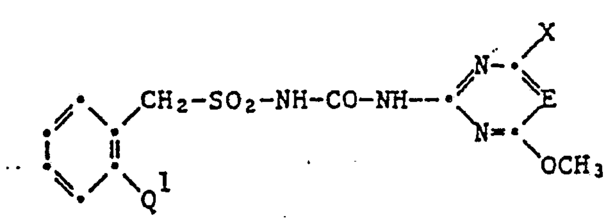

(Ib)

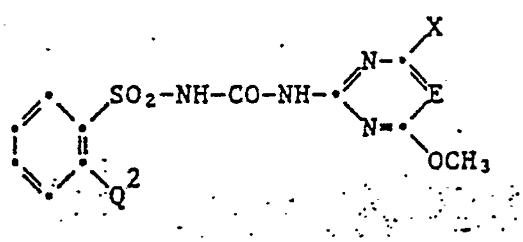

(Ic)

dans lesquelles

$Q^1$ représente un groupe (alcoxy en C 1-C 4)-carbonyle ou (alcényle en C 3-C 4)-oxycarbonyle,

- $Q^2$ représente un groupe phényle, phénoxy, alcoxy en C 1-C 5, alkylthio en C 1-C 5, alkyle en C 1-C 5, halogénophényle, halogénophénoxy, halogénoalcoxy en C 1-C 5, halogénoalkylthio en C 1-C 5, halogénoalkyle en C 1-C 5, alcoxyalcoxy en C 2-C 5, alcényloxy en C 2-C 5 ou halogénoalcényloxy en C 2-C 5,
- E représente l'azote ou le pont méthine, et
- X représente un groupe méthyle ou méthoxy.

**12.** Procédé selon la revendication 11, caractérisé en ce que, dans la sulfonylurée de formule Ib, le symbole $Q^1$ représente un groupe méthoxycarbonyle, E représente le pont méthine et X un groupe méthoxy.

**13.** Procédé selon la revendication 11, caractérisé en ce que, dans la sulfonylurée de formule Ic, $Q^2$ représente un groupe perfluoréthoxy, E l'azote ou le pont méthine et x un groupe méthoxy; ou bien $Q^2$ représente un groupe phényle, E le pont méthine ou l'azote et X un groupe méthyle; ou bien $Q^2$ représente un groupe 2-méthoxy éthoxy, E l'azote et X un groupe méthoxy; ou bien $Q^2$ représente un groupe isopenténityloxy, E l'azote et X un groupe méthoxy; ou bien $Q^2$ représente un groupe 1,2-dichlorovinyloxy, E l'azote et X un groupe méthoxy.

**14.** Procédé selon la revendication 1, caractérisé en ce que les semences sont des semences de colza et la sulfonylurée est la N-(2-méthoxycarbonylphénylsulfonyl)-N'-(4-éthoxy-6-cyclopropyl-1,3,5-triazine-2-yl) -urée.